# FASCICULE DE BREVET EUROPEEN

(11) **EP 2 638 966 B1**
(45) Date de publication et mention de la délivrance du brevet: **06.05.2015**
(21) Numéro de dépôt: 13158102.7
(22) Date de dépôt: 07.03.2013
(51) Int. Cl.: B02C 17/24

(54) **Dispositif d'entraînement et broyeur correspondant**
Antriebsvorrichtung und entsprechender Zerkleinerungsvorrichtung
Drive device and corresponding mill

(30) Priorité: 13.03.2012 FR 1252246
(43) Date de publication de la demande: 18.09.2013
(73) Titulaire: Compagnie Engrenages et Reducteurs-Messian-Durand, 59400 Cambrai (FR)
(72) Inventeur: Lessard, Fabrice, 59400 CAMBRAI (FR)
(74) Mandataire: Blot, Philippe Robert Emile

(56) Documents cités:
- WO-A1-2006/029454
- WO-A1-2011/083274
- DE-A1-102011 009 614
- FR-A- 1 401 324

## Description

La présente invention concerne un dispositif d'entraînement pour broyeur, notamment broyeur horizontal comprenant :
- une couronne dentée adaptée pour être fixée à une chambre de broyage et s'étendant autour d'un axe de couronne,
- un premier réducteur adapté pour transmettre une rotation d'un premier moteur à la couronne dentée, le ou chaque réducteur comprenant :
- un boîtier,
- au moins deux modules de sortie comportant chacun un pignon de sortie et un arbre de sortie définissant un axe de sortie,
chaque pignon de sortie engrenant avec la couronne dentée.

On connaît du document WO-2011/083274 un dispositif d'entraînement de ce type.

Ce dispositif comprend une couronne dentée et des pignons de sortie engrenant avec la couronne dentée. La couronne dentée et les pignons de sortie sont munis de dentures droites.

Toutefois, les dispositifs d'entraînement à denture droite présentent de nombreux inconvénients, tels qu'une puissance de transmission limitée pour une taille donnée.

L'invention a donc pour but d'augmenter la puissance transmissible pour une taille donnée, tout en permettant un entretien rapide et peu couteux du dispositif d'entraînement.

A cet effet l'invention a pour objet un dispositif d'entraînement du type indiqué, caractérisé en ce que
- la couronne dentée est à denture hélicoïdale,
- chaque pignon de sortie est à denture hélicoïdale,
- chaque module de sortie est insérable d'un seul bloc dans le boîtier associé selon un sens d'insertion ou retirable d'un seul bloc de ce boîtier associé selon un sens de retrait, le sens d'insertion et le sens de retrait s'étendant parallèlement à l'axe de sortie, et en ce que
- le dispositif d'entraînement comprend, pour au moins un module de sortie, des moyens de liaison débrayable adaptés pour relier en rotation l'arbre de sortie à un élément de transmission et pour permettre, à l'état débrayé, une rotation du pignon de sortie autour de l'axe de sortie lors du retrait du module de sortie hors du boîtier ou lors de l'insertion du module de sortie dans le boîtier.

Selon d'autres modes de réalisation, l'invention peut comporter l'une ou plusieurs des caractéristiques suivantes :
- l'élément de transmission est un élément de sortie disposé sur l'arbre de sortie, notamment soit une roue dentée de sortie, en particulier à denture hélicoïdale, soit une bride de sortie ;
- l'élément de transmission est fixé axialement sur l'arbre de sortie lorsque les moyens de liaison débrayable sont à l'état débrayé ;
- chaque élément de transmission est une roue dentée de sortie et soit le dispositif d'entraînement comprend, pour chaque module de sortie sauf un, des moyens de liaison débrayable adaptés pour relier en rotation l'arbre de sortie à la roue dentée de sortie et pour permettre, à l'état débrayé, une rotation du pignon de sortie autour de l'axe de sortie lors du retrait du module de sortie hors du boîtier ou lors de l'insertion du module de sortie dans le boîtier, et le pignon de sortie et la roue dentée de sortie du module de sortie qui ne comporte pas de moyens de liaison débrayables, comportent des pas hélicoïdaux identiques, soit le dispositif d'entraînement comprend, pour chaque module de sortie des moyens de liaison débrayable adaptés pour relier en rotation l'arbre de sortie à la roue dentée de sortie et pour permettre, à l'état débrayé, une rotation du pignon de sortie autour de l'axe de sortie lors du retrait du module de sortie hors du boîtier ou lors de l'insertion du module de sortie dans le boîtier, et le pignon de sortie et la roue dentée de sortie comportent des pas hélicoïdaux différents ;
- l'élément de transmission est un élément intermédiaire, et les moyens de liaison débrayable comprennent un pignon de liaison et une roue dentée de liaison, le pignon de liaison étant déplaçable entre une position embrayée et une position débrayée.
- l'élément de transmission est une bride de transmission et les moyens de liaison débrayable comprennent une entretoise et une bride de sortie fixée à l'arbre de sortie, l'entretoise ayant une longueur axiale qui est au moins égale à la distance axiale nécessaire pour sortir le module de sortie axialement du boitier, de préférence au moins la longueur axiale du module de sortie ;
- il comprend un premier moteur d'entraînement étant relié au premier réducteur, et l'élément de transmission et le moteur sont soit disposés sur deux côtés axiaux opposés de la couronne dentée, soit disposés d'un même côté axial de la couronne dentée.
- il comprend un second réducteur et un second moteur d'entrainement.

L'invention a également pour objet un broyeur, notamment broyeur horizontal, ayant une chambre de broyage et un dispositif d'entraînement, caractérisé en ce que le dispositif d'entraînement est un dispositif d'entraînement tel que défini ci-dessus.

L'invention sera mieux comprise à la lecture de la description qui va suivre, donnée uniquement à titre d'exemple et faite en se référant aux dessins annexés sur lesquels :
- la figure 1 est une vue schématique en perspective d'un broyeur selon un premier mode de réalisation de l'invention ;
- les figures 2, 3 et 4 sont des vues analogues à la vue de la figure 1 d'un broyeur selon des deuxième, troisième et quatrième modes de réalisation de l'invention ;
- les figures 5A à 5C montrent des étapes de démontage d'un dispositif d'entraînement selon une première variante de l'invention ;
- les figures 6A à 6D montrent des étapes de démontage d'un dispositif d'entraînement selon une deuxième variante de l'invention ;
- les figures 7A à 7C montrent des étapes de démontage d'un dispositif d'entraînement selon une troisième variante de l'invention ; et
- les figures 8A à 8D montrent des étapes de démontage d'un dispositif d'entraînement selon une quatrième variante de l'invention.

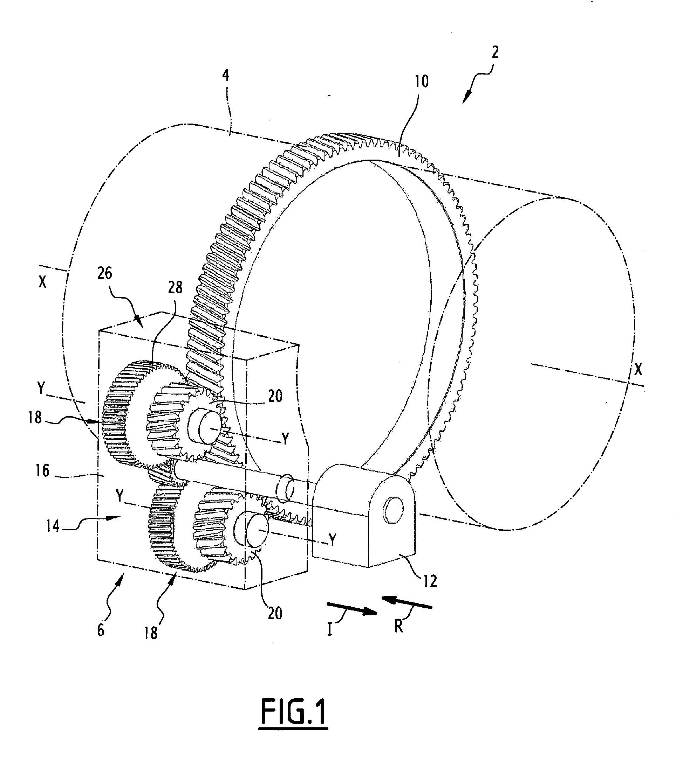

Sur la figure 1 est montré un broyeur horizontal selon un premier mode de réalisation de l'invention, désigné par la référence générale 2. Le broyeur horizontal 2 comprend une chambre de broyage 4 et un dispositif d'entraînement 6.

La chambre de broyage 4 définit un axe central X-X. L'axe central X-X est disposé horizontalement et la chambre de broyage 4 est logée en rotation autour de cet axe central X-X sur des paliers non représentés.

Le dispositif d'entraînement 6 comprend une couronne dentée 10 qui est fixée à la chambre de broyage 4 et qui s'étend autour d'un axe de couronne identique à l'axe central X-X. La couronne dentée 10 comprend une denture hélicoïdale.

Le dispositif d'entraînement 6 comprend un premier moteur 12 ainsi qu'un premier réducteur 14. Le premier réducteur 14 est adapté pour transmettre une rotation de l'arbre de moteur du premier moteur 12 à la couronne dentée 10.

Le mode de réalisation de la Figure 1 est muni d'un seul moteur 12 et d'un seul réducteur 14 adaptés pour entraîner la couronne dentée 10.

Le premier réducteur 14 est muni d'un boîtier 16, indiqué en traits interrompus sur la figure 1. Le premier réducteur 14 comprend également au moins un module de sortie 18, en l'occurrence deux modules de sortie 18 identiques. Par la suite, un seul module de sortie sera décrit.

Chaque module de sortie 18 dispose d'un pignon de sortie 20 et d'un arbre de sortie 22, définissant un axe de sortie Y-Y. Chaque module de sortie 18 est logé dans le boîtier 16 en rotation autour de l'axe de sortie Y-Y. Le sens de retrait R est dirigé en s'éloignant du moteur 12.

Chaque pignon de sortie 20 engrène avec la couronne dentée 10. Chaque pignon de sortie 20 est à denture hélicoïdale.

Chaque module de sortie 18 est insérable d'un seul bloc dans le boîtier 16 selon un sens d'insertion I et/ou retirable d'un seul bloc de ce boîtier 16 selon un sens de retrait R. Le sens d'insertion I et le sens de retrait R sont des sens opposés et s'étendent parallèlement à l'axe de sortie Y-Y. Le sens de retrait R est dirigé en s'éloignant du moteur 12.

Afin de faciliter le retrait ou l'insertion et étant donné que la couronne dentée 10 et le pignon de sortie 20 sont à dentures hélicoïdales, le dispositif d'entraînement 6 comprend, pour chaque module de sortie 18, des moyens de liaison débrayable 24. Ces moyens de liaison débrayable 24 sont adaptés pour relier en rotation l'arbre de sortie 22 à un élément de transmission 26. Les moyens de liaison débrayable 24 ont un état embrayé et un état débrayé. A l'état embrayé, l'arbre de sortie 22 est solidaire en rotation de l'élément de transmission 26. A l'état débrayé, les moyens de liaison débrayable 24 permettent une rotation du pignon de sortie 20 autour de l'axe de sortie et par rapport à l'élément de transmission 26, et ceci lors du retrait du module de sortie 18 hors du boîtier 16 ou lors de l'insertion du module de sortie dans le boîtier 16.

L'élément de transmission 26 est un élément rotatif qui est situé en amont des moyens de liaison débrayable 24, qui est entraîné par le moteur 12 et qui transmet la rotation induite par le moteur 12 aux moyens de liaison débrayable 24. En particulier, l'élément de transmission 26 est situé directement en amont des moyens de liaison débrayable 24.

L'élément de transmission 26 est dans le cas présent une roue dentée de sortie 28 portée par l'arbre de sortie 22.

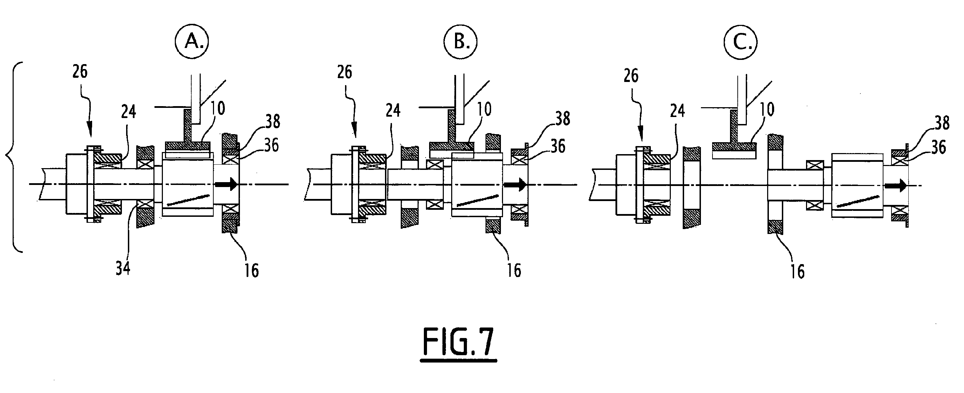

En variante, l'élément de transmission 26 peut être un autre élément de sortie disposé sur l'arbre de sortie tel qu'une bride de sortie (Figure 7).

La roue dentée de sortie 28 est dans le cas présent une roue dentée de sortie à denture hélicoïdale.

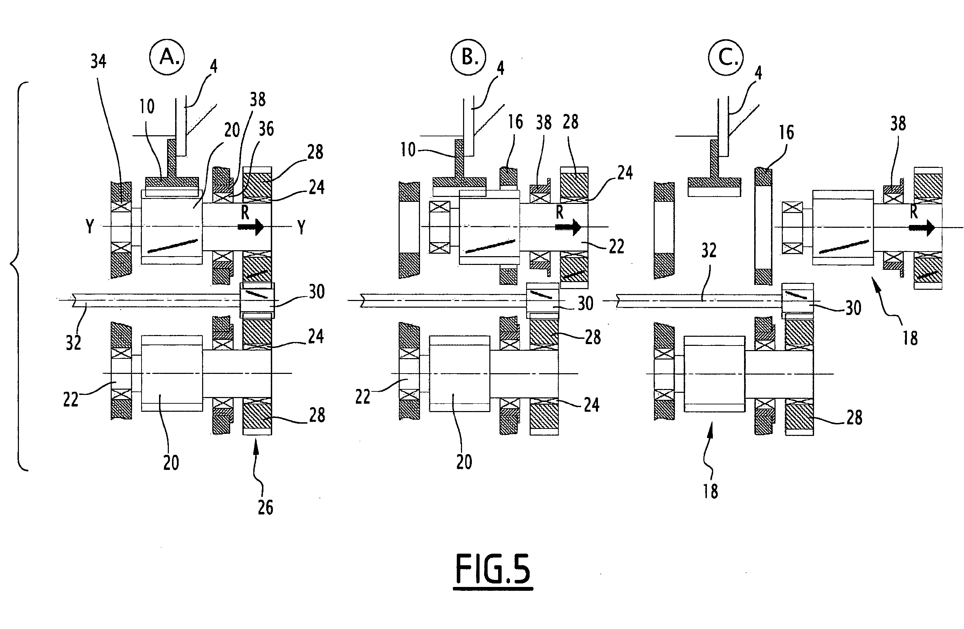

Sur la figure 5 est montré plus en détail le réducteur 14. Les moyens de liaison débrayable 24 sont une liaison disposée entre la roue dentée de sortie 28 et l'arbre de sortie 22. L'élément de transmission 26, donc la roue dentée de sortie 28, est fixé axialement sur l'arbre de sortie 22 même lorsque les moyens de liaison débrayable 24 sont débrayés.

Les moyens de liaison débrayables 24 peuvent être des surfaces coniques coopérantes disposées sur l'arbre de sortie 22 et la roue de sortie 28.

Ou bien les moyens de liaison 24 sont une frette de serrage ou une frette d'assemblage. Ces moyens de liaison peuvent aussi être un assembleur expansible.

On voit que le premier réducteur 14 comprend également un pignon de liaison 30 et un arbre de liaison 32. L'arbre de moteur du moteur 12 est fixé directement, c'est-à-dire sans réducteur de vitesse à l'arbre de liaison 32, par exemple uniquement au moyen d'un accouplement à denture.

Le pignon de liaison 30 engrène simultanément avec les deux roues dentées de sortie 28 du premier réducteur 14.

L'élément de transmission 26, dans le cas présent la roue dentée de sortie 28, et le premier moteur 12 sont disposés sur deux côtés axiaux opposés de la couronne dentée 10. Ceci permet une construction compacte du broyeur.

Le module de sortie 18 comprend également deux roulements 34, 36, disposés de part et d'autre du pignon de sortie 20, ainsi qu'un boîtard 38.

Le diamètre extérieur du roulement 34 est tel que ce roulement 34 n'interfère pas avec la couronne dentée 10 lors du retrait.

Le boîtard 38 a un diamètre extérieur supérieur au diamètre extérieur du pignon de sortie 20 afin d'éviter l'interférence entre le pignon et le boîtier 16.

Le procédé de démontage du réducteur de la Figure 5 comprend les étapes suivantes.

On part de la configuration montrée sur la figure 5A, dans laquelle le module de sortie 18 est disposé dans le boîtier 16. Chaque pignon de sortie 20 engrène avec la couronne dentée 10 et chaque roue dentée de sortie 28 engrène avec le pignon de liaison 30. Les moyens de liaison débrayable 24 sont embrayés et fixent en rotation la roue dentée de sortie 28 à l'arbre de sortie 22.

Ensuite, les moyens de liaison débrayable 24 sont débrayés. Dans cet état, la roue dentée de sortie 28 reste axialement fixe par rapport à l'axe de sortie Y-Y sur l'arbre de sortie 22, mais est libre en rotation autour de l'axe de sortie Y-Y autour de cet arbre de sortie 22, au moins sur une plage angulaire correspondant à la rotation angulaire différentielle compte tenu de la différence de pas hélicoïdal entre la roue dentée 28 et le pignon de sortie 20 lors de l'extraction.

Ensuite, le module de sortie 18, qui inclut la roue dentée de sortie 28, est décalé axialement selon le sens de retrait R. Lors de ce décalage, le pignon de sortie tourne autour de l'axe de sortie Y-Y sous l'effet des dentures hélicoïdales du pignon de sortie 20 et de la couronne dentée 10.

Puis, la roue dentée de sortie 28 est dégagée du pignon de liaison 30 (figure 5B). Le décalage selon le sens de retrait R est poursuivi jusqu'à ce que le module de sortie 18 se trouve complètement en dehors du boîtier 16, le pignon de sortie 20 étant complètement dégagé de la couronne dentée 10 (Figure 5C).

Selon un premier cas, chaque pignon de sortie 20 et les roues dentées 28 ont des pas hélicoïdaux identiques. Dans ce cas, au moins chaque module de sortie 18, sauf un seul, comporte des moyens de liaison débrayable 24. Dans ce cas ces moyens de liaison débrayables 24 sont utilisés pour ajuster la position angulaire des dentures les unes par rapport aux autres. La démontabilité axiale des modules de sortie est obtenue grâce à l'identité des pas hélicoïdaux.

Selon un second cas, chaque pignon de sortie 20 et les roues dentées 28 ont des pas hélicoïdaux différents. Dans ce cas, chaque module de sortie 18 comporte des moyens de liaison débrayable 24. Dans ce cas ces moyens de liaison débrayables 24 peuvent être utilisés pour ajuster la position angulaire des dentures les unes par rapport aux autres. La demontabilité axiale des modules de sortie est obtenue grâce aux moyens de liaison débrayables 24.

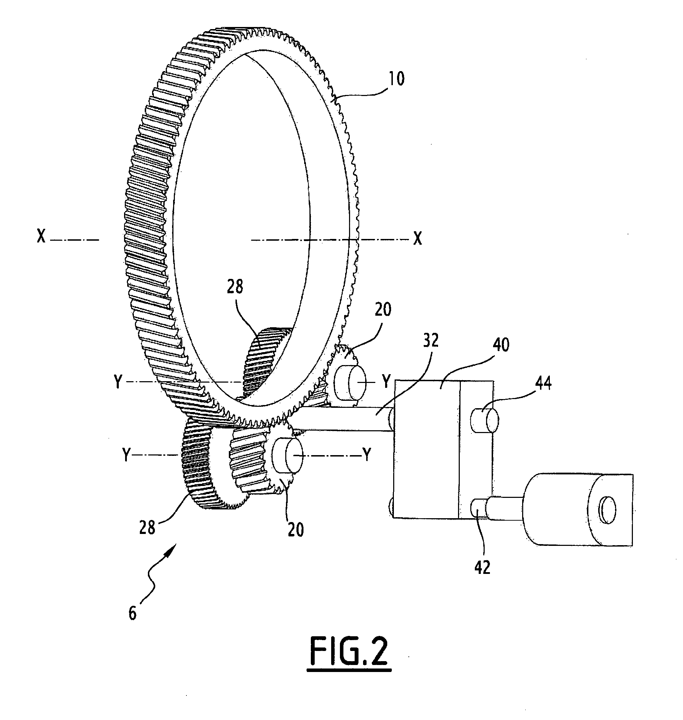

Sur la figure 2 est montré un dispositif d'entraînement selon un deuxième mode de réalisation, qui diffère de celui de la figure 1 uniquement par ce qui suit. Les éléments analogues portent les mêmes références.

Le premier moteur 12 est relié à l'arbre de liaison 32 non pas directement, mais par l'intermédiaire d'un premier réducteur intermédiaire 40. Le réducteur intermédiaire 40 comprend un arbre d'entrée 42 et un arbre de sortie de réducteur 44 décalés radialement l'un par rapport à l'autre. Ainsi, l'arbre de liaison 32 et l'arbre de moteur sont décalés radialement l'un par rapport à l'autre.

Le premier réducteur intermédiaire 40 confère une grande flexibilité au broyeur 2 et permet d'adapter la position du moteur 12 à des contraintes d'espace éventuellement présentes. Aussi, le premier réducteur intermédiaire 40 permet d'adapter la vitesse du moteur 12 à une vitesse nominale des pignons de sortie.

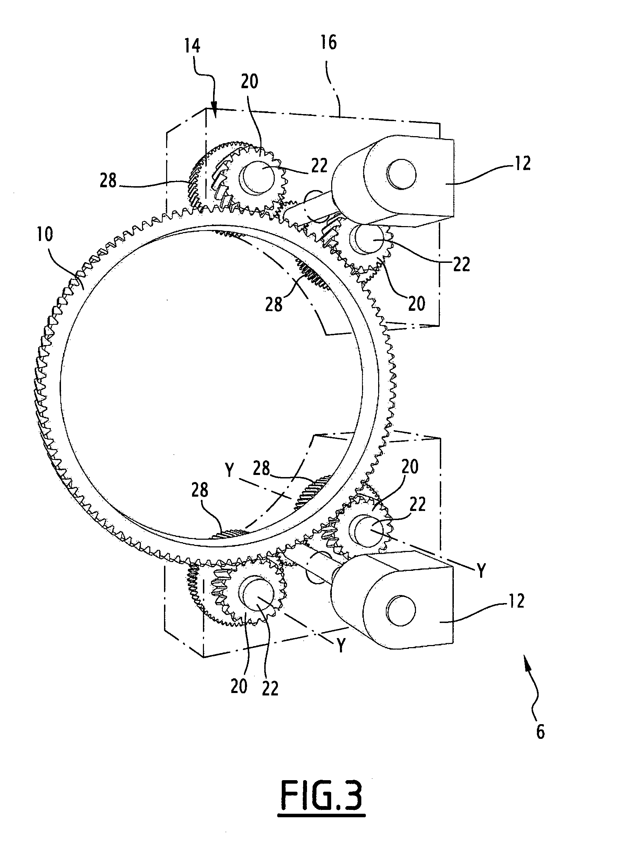

La figure 3 montre un troisième mode de réalisation d'un dispositif d'entraînement selon l'invention. Ce dispositif d'entraînement diffère du dispositif d'entraînement de la Figure 1 uniquement par ce qui suit. Les éléments analogues portent les mêmes références.

Le dispositif d'entraînement 6 comporte un premier moteur 12, un premier réducteur 14, ainsi qu'un deuxième moteur 12 et un deuxième réducteur 14. Le deuxième moteur 12 et le réducteur 14 deuxième ont les mêmes caractéristiques que le premier moteur 12 ou le premier réducteur 14 décrits ci-dessus.

Le dispositif d'entraînement comporte donc quatre pignons de sortie 20, dont à chaque fois deux sont associés à un réducteur 14 et entraînés par un moteur 12.

Ce mode de réalisation permet de cumuler la puissance des moteurs au niveau de la couronne dentée 10.

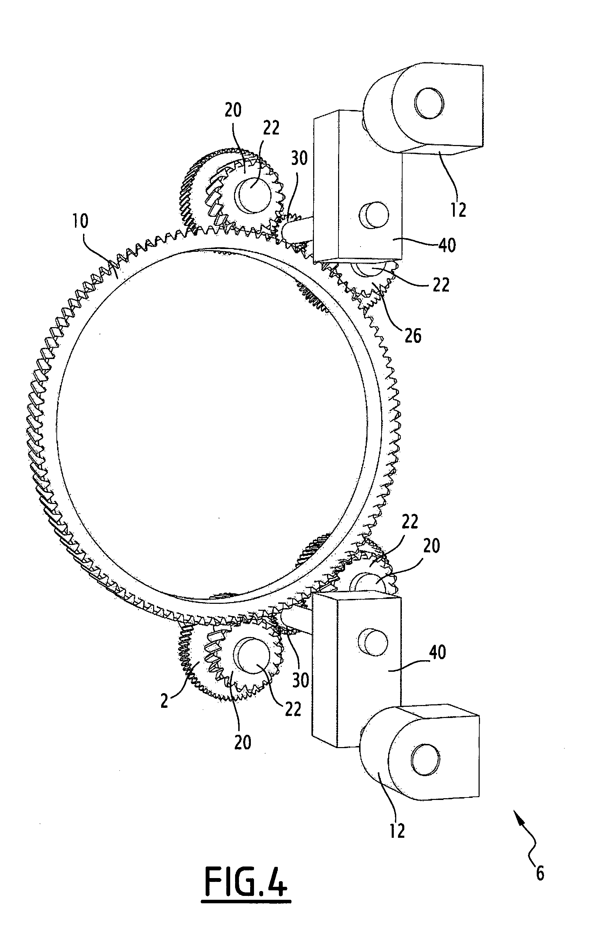

Sur la figure 4 est représenté un quatrième mode de réalisation d'un dispositif d'entraînement selon l'invention. Ce dispositif d'entraînement 6 diffère de celui de la figure 2 uniquement par ce qui suit. Les éléments analogues portent les mêmes références.

Ce dispositif d'entraînement 6 comporte un deuxième réducteur 14 et un deuxième moteur 12 ainsi qu'un deuxième réducteur intermédiaire 40. Le deuxième moteur 12, le deuxième réducteur 14 et le deuxième réducteur intermédiaire 40 comportent les mêmes caractéristiques que le premier moteur 12, le premier réducteur 14 et le premier réducteur intermédiaire 40 décrits ci-dessus.

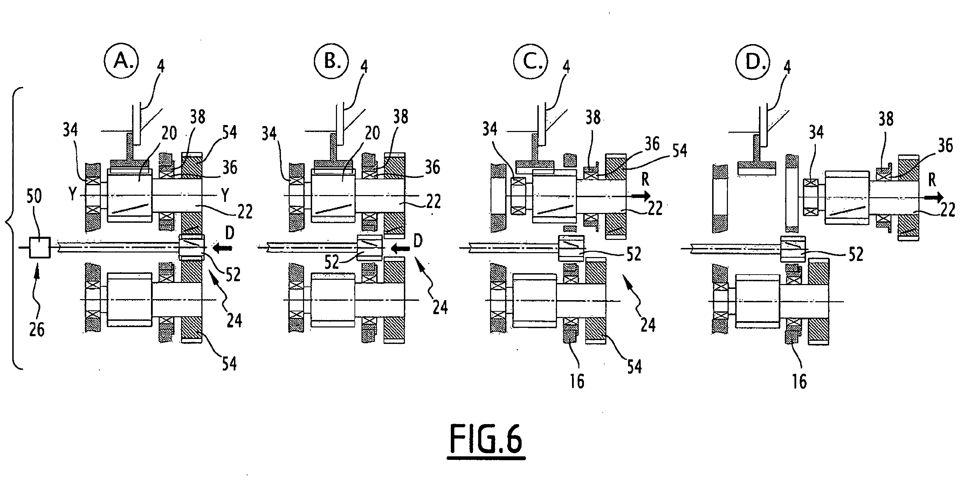

Sur la figure 6 est montré le détail d'un premier réducteur 14 selon une deuxième variante de l'invention. Cette variante diffère du premier réducteur 14 décrit ci-dessus uniquement par ce qui suit. Les éléments analogues portent les mêmes références.

L'élément de transmission 26 est un élément intermédiaire 50 libérable disposé entre le moteur 12 et les moyens de liaison débrayable 24. Les moyens de liaison débrayable 24 comprennent un pignon de liaison 52 et une roue dentée de liaison 54. La roue dentée de liaison 54 est axialement et radialement fixée sur l'arbre de sortie 22 et ceci aussi bien que lorsque les moyens de liaison débrayable 24 sont à l'état embrayé que lorsque les moyens de liaison débrayable 24 sont à l'état débrayé.

Le pignon de liaison 52 est déplaçable selon un sens de débrayage D entre une position embrayée, dans laquelle il engrène avec la ou chaque roue dentée de liaison 54 et une position débrayée dans laquelle il est hors contact des roues dentées de liaison 54 (Voir figure 6B). Le sens de débrayage D est dirigé vers le moteur d'entrainement 12 associé à ce pignon de liaison 52. En variante, le sens de débrayage est dirigé à l'opposé du moteur d'entrainement 12 associé au pignon de liaison 52.

Le dispositif d'entraînement 6 est démonté de la façon suivante.

On part de la configuration montrée sur la figure 6A qui montre les moyens de liaison débrayable 24 à l'état embrayé. Le pignon de liaison 52 engrène avec chaque roue dentée de liaison 54. L'élément de transmission 26 relie le pignon de liaison 52 au moteur 12.

L'élément intermédiaire 50 est tout d'abord libéré aussi permettant un décalage axial du pignon de liaison 52 vers sa position débrayée (voir figure 6B).

Ensuite, le module de sortie 18, comprenant le pignon de sortie 20, l'arbre de sortie 22, les roulements 34, 36, le boîtard 38 et la roue dentée de liaison 54, est décalé axialement selon le sens de retrait R jusqu'à ce que le pignon de sortie 20 est hors contact de la couronne dentée 10. Pendant ce retrait, le fait que la roue dentée de liaison 54 est hors contact du pignon de liaison 52 permet une rotation autour de l'axe de sortie Y-Y du module de sortie 18 sous l'effet des dentures hélicoïdales de la couronne dentée 10 et du pignon de sortie 20 (Voir figure 6C).

Ensuite, le module de sortie 18 peut être extrait complètement hors du boîtier 16.

Cette variante a l'avantage qu'un seul moyen de liaison débrayable 24 est nécessaire pour les deux pignons de sortie 20.

Sur la figure 7 est représentée une troisième variante d'un dispositif d'entraînement selon l'invention. Ce dispositif diffère de celui montré sur la figure 5 par ce qui suit, les éléments analogues portant les mêmes références.

L'élément de transmission 26 est un élément de sortie disposé sur l'arbre de sortie 22, en l'occurrence une bride de sortie 60. La bride de sortie 60 est reliée par les moyens de liaison débrayables 24 à l'arbre de sortie 22.

L'élément de transmission 26 et le moteur d'entrainement 12 associé sont disposés d'un même côté axial de la couronne dentée 10.

L'élément de transmission 26 peut être relié au moteur d'entrainement 12 au moyen d'un réducteur intermédiaire non représenté. Ce réducteur intermédiaire comporte un seul pignon de liaison et, pour chaque pignon de sortie 20, une roue dentée de liaison, de manière analogue au pignon de liaison 52 et aux roues dentées de liaison 54 de la figure 6. Le réducteur intermédiaire est disposé dans un boitier supplémentaire, distinct du boitier 16.

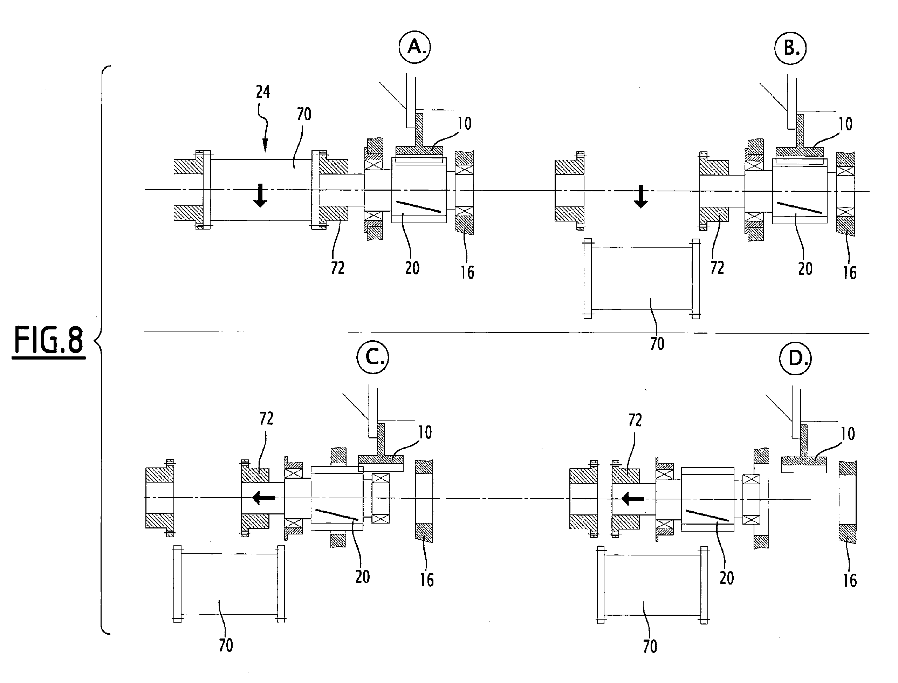

Sur la figure 8 est représentée une quatrième variante d'un dispositif d'entraînement selon l'invention. Cette variante diffère de la variante de la figure 7 uniquement par ce qui suit. Les éléments analogues portent les mêmes références.

L'élément de transmission 26 est une bride de transmission 60 fixée à demeure en rotation par rapport au moteur 12.

Les moyens de liaison débrayable 24 comprennent une entretoise 70 et une bride de sortie 72. La bride de sortie 72 est fixée à demeure à l'arbre de sortie 22.

L'entretoise 70 a une longueur axiale L qui est au moins égale à la distance nécessaire pour sortir le module de sortie 18 axialement du boîtier 16. Dans le cas présent, l'entretoise 70 a une longueur axiale qui est au moins la longueur axiale du module de sortie.

Le dispositif d'entraînement 6 selon la quatrième variante est démonté de la façon suivante.

Tout d'abord, les liaisons entre l'entretoise 70 et l'élément de transmission 26 et la bride de sortie 72 sont libérées (Figure 8A).

Ensuite, l'entretoise 70 est retirée entre l'élément de transmission 26 et la bride de sortie 72. Ce retrait est effectué radialement par rapport à l'axe de sortie Y-Y (Figure 8B).

Puis, le module de sortie 18, comportant au moins le pignon de sortie 20, l'arbre de sortie 22 et la bride de sortie 72, est retiré hors du boîtier 16 selon le sens de retrait R (Figure 8C/D).

Le dispositif d'entraînement selon l'invention a les avantages suivants :
- Le réducteur autorise un démontage rapide d'un pignon de sortie.
- Lors du retrait/de l'insertion du module de sortie, il n'est pas nécessaire de démonter, ni de déplacer le boitier.
- Le retrait ne dérègle ni le module de sortie, ni l'engrènement pignon de sortie /couronne dentée.
- La qualification des opérateurs requis est basique, la qualification en tant que technicien de maintenance suffit.
- Aucun désaccouplement supplémentaire que celui des moyens liasion débrayable 24 n'est nécessaire (moteur comme réducteur primaire).
- Le temps d'intervention pour un retrait et une insertion des modules de sortie est faible (<24h).
- Le retrait/l'insertion ne nécessite pas de moyen lourd d'outillage ou de levage. L'ordre de grandeur à déplacer est celui d'un sous-ensemble, à comparer avec l'ordre de grandeur d'un réducteur complet des solutions existantes.
- Chaque pignon de la transmission peut être démonté indépendamment des autres.

## Revendications

1. Dispositif d'entraînement (6) pour broyeur, notamment broyeur horizontal comprenant :
- une couronne dentée (10) adaptée pour être fixée à une chambre de broyage (4) et s'étendant autour d'un axe de couronne (X-X),
- un premier réducteur (14) adapté pour transmettre une rotation d'un premier moteur (12) à la couronne dentée, le ou chaque réducteur comprenant :
- un boîtier (16),
- au moins deux modules de sortie (18) comportant chacun un pignon de sortie (20) et un arbre de sortie (22) définissant un axe de sortie (Y-Y),
chaque pignon de sortie (20) engrenant avec la couronne dentée,
**caractérisé en ce que**
- la couronne dentée (10) est à denture hélicoïdale,
- chaque pignon de sortie (20) est à denture hélicoïdale,
- chaque module de sortie (18) est insérable d'un seul bloc dans le boîtier associé selon un sens d'insertion (I) ou retirable d'un seul bloc de ce boîtier associé selon un sens de retrait (R), le sens d'insertion et le sens de retrait s'étendant parallèlement à l'axe de sortie (Y-Y), et **en ce que**
- le dispositif d'entraînement comprend, pour au moins un module de sortie, des moyens de liaison débrayable (24) adaptés pour relier en rotation l'arbre de sortie à un élément de transmission (26) et pour permettre, à l'état débrayé, une rotation du pignon de sortie (20) autour de l'axe de sortie lors du retrait du module de sortie (18) hors du boîtier ou lors de l'insertion du module de sortie (18) dans le boîtier (16).

2. Dispositif d'entraînement selon la revendication 1, **caractérisé en ce que** l'élément de transmission (26) est un élément de sortie disposé sur l'arbre de sortie, notamment soit une roue dentée de sortie (28), en particulier à denture hélicoïdale, soit une bride de sortie (60).

3. Dispositif d'entraînement selon la revendication 2, **caractérisé en ce que** l'élément de transmission (26) est fixé axialement sur l'arbre de sortie (22) lorsque les moyens de liaison débrayable (24) sont à l'état débrayé.

4. Dispositif d'entraînement selon la revendication 2 ou 3, **caractérisé en ce que** Chaque élément de transmission (26) est une roue dentée de sortie (28) et **en ce que**
- soit le dispositif d'entraînement comprend, pour chaque module de sortie sauf un, des moyens de liaison débrayable (24) adaptés pour relier en rotation l'arbre de sortie à la roue dentée de sortie (28) et pour permettre, à l'état débrayé, une rotation du pignon de sortie (20) autour de l'axe de sortie lors du retrait du module de sortie (18) hors du boîtier ou lors de l'insertion du module de sortie (18) dans le boîtier (16), et le pignon de sortie (20) et la roue dentée de sortie (28) du module de sortie qui ne comporte pas de moyens de liaison débrayables, comportent des pas hélicoïdaux identiques,
- soit le dispositif d'entraînement comprend, pour chaque module de sortie des moyens de liaison débrayable (24) adaptés pour relier en rotation l'arbre de sortie à la roue dentée de sortie (28) et pour permettre, à l'état débrayé, une rotation du pignon de sortie (20) autour de l'axe de sortie lors du retrait du module de sortie (18) hors du boîtier ou lors de l'insertion du module de sortie (18) dans le boîtier (16), et le pignon de sortie (20) et la roue dentée de sortie (28) comportent des pas hélicoïdaux différents.

5. Dispositif d'entraînement selon la revendication 1, **caractérisé en ce que** l'élément de transmission (26) est un élément intermédiaire (50), et **en ce que** les moyens de liaison débrayable (24) comprennent un pignon de liaison (52) et une roue dentée de liaison (54), le pignon de liaison (52) étant déplaçable entre une position embrayée et une position débrayée.

6. Dispositif d'entraînement selon la revendication 1, **caractérisé en ce que** l'élément de transmission (26) est une bride de transmission (60) et les moyens de liaison débrayable (24) comprennent une entretoise (70) et une bride de sortie (72) fixée à l'arbre de sortie (22), l'entretoise ayant une longueur axiale (L) qui est au moins égale à la distance axiale nécessaire pour sortir le module de sortie (18) axialement du boitier (16), de préférence au moins la longueur axiale du module de sortie.

7. Dispositif d'entraînement selon l'une quelconque des revendications 1 à 6, **caractérisé en ce qu'il** comprend un premier moteur d'entraînement (12) étant relié au premier réducteur, et l'élément de transmission (26) et le moteur sont soit disposés sur deux côtés axiaux opposés de la couronne dentée, soit disposés d'un même côté axial de la couronne dentée (10).

8. Dispositif d'entraînement pour broyeur selon l'une quelconque des revendications 1 à 7, **caractérisé en ce qu'il** comprend un second réducteur (14) et un second moteur d'entrainement (12).

9. Broyeur, notamment broyeur horizontal, ayant une chambre de broyage (4) et un dispositif d'entraînement (6), **caractérisé en ce que** le dispositif d'entraînement est un dispositif d'entraînement selon l'une quelconque des revendications précédentes.

## Patentansprüche

1. Antriebsvorrichtung (6) für einen Zerkleinerer, insbesondere für einen Horizontalzerkleinerer, aufweisend:
- einen Zahnkranz (10), der angepasst ist, um an einer Zerkleinerungskammer (4) befestigt zu sein, und der sich um eine Kranzachse (X-X) herum erstreckt,
- ein erstes Getriebe (14) das angepasst ist, um eine Drehung eines ersten Motors (12) an den Zahnkranz zu übertragen, wobei das oder jedes Getriebe aufweist:
- ein Gehäuse (16),
- mindestens zwei Ausgangsmodule (18), die jeweils ein Ausgangsritzel (20) und eine Ausgangswelle (22) aufweisen, die eine Ausgangsachse (Y-Y) definiert,
wobei jedes Ausgangsritzel (20) mit dem Zahnkranz in Eingriff ist,
**dadurch gekennzeichnet, dass**:
- der Zahnkranz (10) schrägverzahnt ist,
- jedes Ausgangsritzel (20) schrägverzahnt ist,
- jedes Ausgangsmodul (18) entlang einer Einsetzrichtung (I) in einem einzigen Stück in das zugehörige Gehäuse einsetzbar ist oder entlang einer Herausziehrichtung (R) in einem einzigen Stück aus dem zugehörigen Gehäuse herausziehbar ist, wobei sich die Einsetzrichtung und die Herausziehrichtung parallel zu der Ausgangsachse (Y-Y) erstrecken, und dass
- die Antriebsvorrichtung für mindestens ein Ausgangsmodul aufweist: Mittel für eine ausrückbare Verbindung (24), die angepasst sind, um die Ausgangswelle drehbar mit einem Übertragungselement (26) zu verbinden, und um im Einrückzustand beim Herausziehen des Ausgangsmoduls (18) aus dem Gehäuse oder beim Einsetzen des Ausgangsmoduls (18) in das Gehäuse (16) ein Drehen des Ausgangsritzels (20) um die Ausgangsachse zu ermöglichen.

2. Antriebsvorrichtung gemäß Anspruch 1, **dadurch gekennzeichnet, dass** das Übertragungselement (26) ein an der Ausgangswelle angeordnetes Ausgangselement, insbesondere entweder ein Ausgangszahnrad (28), insbesondere mit Schrägverzahnung, oder ein Ausgangsflansch (60) ist.

3. Antriebsvorrichtung gemäß Anspruch 2, **dadurch gekennzeichnet, dass** das Übertragungselement (26) axial an der Ausgangswelle (22) befestigt ist, wenn sich die ausrückbare-Verbindung-Mittel (44) im Ausrückzustand befinden.

4. Antriebsvorrichtung gemäß Anspruch 2 oder 3, **dadurch gekennzeichnet, dass** jedes Übertragungselement (26) ein Ausgangszahnrad (28) ist, und dass
- entweder die Antriebsvorrichtung für jedes Ausgangsmodul mit Ausnahme von einem ausrückbare-Verbindung-Mittel (24) aufweist, die angepasst sind, um die Ausgangswelle drehbar mit dem Ausgangszahnrad (28) zu verbinden und im Ausrückzustand beim Herausziehen des Ausgangsmoduls (18) aus dem Gehäuse oder beim Einsetzen des Ausgangsmoduls (18) in das Gehäuse (16) ein Drehen des Ausgangsritzels (20) um die Ausgangsachse zu ermöglichen, und das Ausgangsritzel (20) und das Ausgangszahnrad (28) des Ausgangsmoduls, das keine ausrückbare-Verbindung-Mittel aufweist, gleiche Steigungshöhen aufweisen,
- oder die Antriebsvorrichtung für jedes Ausgangsmodul ausrückbare-Verbindung-Mittel (24) aufweist, die angepasst sind, um die Ausgangswelle drehbar mit dem Ausgangszahnrad (28) zu verbinden und im Ausrückzustand beim Herausziehen des Ausgangsmoduls (18) aus dem Gehäuse oder beim Einsetzen des Ausgangsmoduls (18) in das Gehäuse (16) ein Drehen des Ausgangsritzels (20) um die Ausgangsachse zu ermöglichen, und das Ausgangsritzel (20) und das Ausgangszahnrad (28) unterschiedliche Steigungshöhen aufweisen.

5. Antriebsvorrichtung gemäß Anspruch 1, **dadurch gekennzeichnet, dass** das Übertragungselement (26) ein Zwischenelement (50) ist, und dass die ausrückbare-Verbindung-Mittel (24) ein Verbindungsritzel (52) und ein Verbindungszahnrad (54) aufweisen, wobei das Verbindungsritzel (52) zwischen einer Einrückposition und einer Ausrückposition bewegbar ist.

6. Antriebsvorrichtung gemäß Anspruch 1, **dadurch gekennzeichnet, dass** das Übertragungselement (26) ein Übertragungsflansch (60) ist und die ausrückbare-Verbindung-Mittel (24) einen Abstandshalter (70) und einen Ausgangsflansch (72) aufweisen, der an der Ausgangswelle (22) befestigt ist, wobei der Abstandshalter eine Axiallänge (L) hat, die mindestens gleich der axialen Entfernung, die erforderlich ist, um das Ausgangsmodul (18) axial aus dem Gehäuse (16) zu entfernen, vorzugsweise mindestens die Axiallänge des Ausgangsmoduls ist.

7. Antriebsvorrichtung gemäß irgendeinem der Ansprüche 1 bis 6, **dadurch gekennzeichnet, dass** sie einen ersten Antriebsmotor (12) aufweist, der mit dem ersten Getriebe verbunden ist, und dass das Übertragungselement (26) und der Motor auf zwei einander entgegengesetzten Axialseiten des Zahnkranzes angeordnet sind oder auf einer gleichen Axialseite des Zahnkranzes (10) angeordnet sind.

8. Antriebsvorrichtung für einen Zerkleinerer gemäß irgendeinem der Ansprüche 1 bis 7, **dadurch gekennzeichnet, dass** sie ein zweites Getriebe (14) und einen zweiten Antriebsmotor (12) aufweist.

9. Zerkleinerer, insbesondere Horizontalzerkleinerer, aufweisend eine Zerkleinerungskammer (4) und eine Antriebsvorrichtung (6), **dadurch gekennzeichnet, dass** die Antriebsvorrichtung eine Antriebsvorrichtung gemäß irgendeinem der vorhergehenden Ansprüche ist.

## Claims

1. A driving device (6) for a mill, in particular a horizontal mill comprising:
- a gear ring (10) suitable for being fastened to a grinding chamber (4) and extending around a ring axis (X-X),
- a first reduction transmission (14) suitable for transmitting a rotation from a first motor (12) to the gear ring, the or each reduction transmission comprising:
- a case (16),
- at least two output modules (18) each including an output pinion (20) and an output shaft (22) defining an output axis (Y-Y),
each output pinion (20) meshing with the gear ring,
**characterized in that**
- the gear ring (10) has helical teeth,
- each output pinion (20) has helical teeth,
- each output module (18) can be inserted in a single piece into the associated case in an insertion direction (I) or removed in a single piece from that associated case in a removal direction (R), the insertion direction and the removal direction extending parallel to the output axis (Y-Y), and **in that**
- the driving device comprises, for at least one output module, disconnectable connecting means (24) suitable for rotatably connecting the output shaft to a transmission element (26) and allowing, in the disconnected state, a rotation of the output pinion (20) around the output axis upon removal of the output module (18) outside the case or during insertion of the output module (18) into the case (16).

2. The driving device according to claim 1, **characterized in that** the transmission element (26) is an output element arranged on the output shaft, in particular either a toothed output wheel (28), in particular with helical teeth, or an output flange (60).

3. The driving device according to claim 2, **characterized in that** the transmission element (26) is axially fixed on the output shaft (22) when the disconnectable connecting means (24) are in the disconnected state.

4. The driving device according to claim 2 or 3, **characterized in that**
each transmission element (26) is a toothed output wheel (28) and **in that**
- either the driving device comprises, for each output module except one, disconnectable connecting means (24) suitable for rotatably connecting the output shaft to the toothed output wheel (28) and allowing, in the disconnected state, a rotation of the output pinion (20) around the output axis during removal of the output module (18) from the case or during insertion of the output module (18) in the case (16), and the output pinion (20) and the toothed output wheel (28) of the output module that does not include disconnectable connecting means have identical helical pitches,
- or the driving device comprises, for each output module, disconnectable connecting means (24) suitable for rotatably connecting the output shaft to the toothed output wheel (28) and allowing, in the disconnected state, a rotation of the output pinion (20) around the output axis during removal of the output module (18) from the case or during insertion of the output module (18) in the case (16), and the output pinion (20) and toothed output wheel (28) have different helical pitches.

5. The driving device according to claim 1, **characterized in that** the transmission element (26) is an intermediate element (50), and **in that** the disconnectable connecting means (24) comprise a connecting pinion (52) and a toothed connecting wheel (54), the connecting pinion (52) being movable between a connected position and a disconnected position.

6. The driving device according to claim 1, **characterized in that** the transmission element (26) is a transmission flange (60) and the disconnectable connecting means (24) comprise a spacer (70) and an output flange (72) fastened to the output shaft (22), the spacer having an axial length (L) that is at least equal to the axial distance necessary to remove the output module (18) axially from the case (16), preferably at least the axial length of the output module.

7. The driving device according to any one of claims 1 to 6, **characterized in that** it comprises a first drive motor (12) connected to the first reduction transmission, and the transmission element (26) and the motor are either arranged on two opposite axial sides of the gear ring, or arranged on a same axial side of the gear ring (10).

8. The driving device for a mill according to any one of claims 1 to 7, **characterized in that** it comprises a second reduction transmission (14) and a second drive motor (12).

9. A mill, in particular a horizontal mill, having a grinding chamber (4) and a driving device (6), **characterized in that** the driving device is a driving device according to any one of the preceding claims.
